# EUROPEAN PATENT SPECIFICATION

(11) **EP 2 417 486 B1**
(45) Date of publication and mention of the grant of the patent: **17.10.2018**
(21) Application number: 10713542.8
(22) Date of filing: 08.04.2010
(51) Int. Cl.: G02B 6/42

(54) **LASER TO OPTICAL FIBER COUPLING DEVICE AND METHOD**
EINRICHTUNG UND VERFAHREN ZUR KOPPLUNG VON LASER AN OPTISCHE FASER
DISPOSITIF ET PROCÉDÉ DE COUPLAGE LASER À FIBRE OPTIQUE

(30) Priority: 10.04.2009 US 421866
(43) Date of publication of application: 15.02.2012
(73) Proprietor: Raytheon Company, Waltham, MA 02451-1449 (US)
(72) Inventor: MILLS, James P., Austin Texas 78735-1650 (US); DAMOMMIO, Anthony Vinson, McKinney Texas 75071 (US); SCHAUB, Michael P., Tucson Arizona 85719 (US); ALA, Eero H., Tucson Arizona 85747-5037 (US); TRAIL, Nicholas D., Tucson Arizona 85710-8155 (US); HANAUSKA, Gregory P., Tucson Arizona 85745-8611 (US); CHARLOW, Clifton J., Tucson Arizona 85745 (US)
(74) Representative: Jackson, Richard Eric
(86) International application number: PCT/US2010/030339
(87) International publication number: WO 2010/118197

(56) References cited:
- EP-A1- 0 682 280
- EP-A2- 0 511 805
- DE-A1- 4 307 986
- JP-A- S5 942 504
- US-A- 4 707 073
- US-A- 4 834 494
- US-A- 5 104 242
- US-A- 5 289 553

## Description

### Field of the Invention

Our invention relates to a light transmission device and method, and more particularly to coupling device and method for directing light from a laser into an optical fiber, particularly an infrared laser for a missile defense system.

### Background

Guided anti-aircraft missiles often include an infrared guidance system. Aircraft engines output a lot of heat, and the body of the aircraft tends to be relatively hot compared to the surrounding air due to friction with the air during flight. The infrared system guides the missile to the target aircraft by focusing on the heat generated by the aircraft.

To counter the infrared guidance capability of the missile, aircraft can dispense flares that present a more intense heat source than the aircraft. This can confuse the guidance system into guiding the missile toward the flare instead of the aircraft and/or blinding the guidance system long enough for the aircraft to maneuver out of the missile's field of view. Although flares can be effective, the aircraft can only carry limited quantities, and they are only effective for a short range and time period, since a flying aircraft will soon move away from the flare.

Another way to counter the infrared guidance system is to shine an intense infrared laser at the missile so that it is effectively blind and cannot track the aircraft. Systems to effectively direct the infrared light from the laser to the missile from a moving aircraft are being developed, but difficulties remain.

US 5,104,242 discloses a fiber optic connector including a plug with a ferrule adapted to be connected to a top end of an optical fiber, a receptacle associate with a light-emitting element and having a ferrule insertion hole defined therein for receiving the plug therein, and a spring disposed in the ferrule insertion hole and resiliently displaceable into a surface of the hole when pressed by the ferrule.

US 4,707,073 discloses a fiber optic beam delivery system.

DE 43 07 986 A1 discloses an optical transmission device with a transmitter and a transmitter-receiving housing.

EP 0 511 805 A2 discloses a coupler for a laser delivery system.

EP 0 682 280 A1 discloses an optical fiber collimator.

US 5,289,553 discloses a lens holding system for fiber optic output couplers.

### Summary

Systems on board aircraft for defense against missiles with infrared guidance systems typically will include both a laser for generating infrared light and a turret that can rotate to direct the light toward a missile. The light can travel to the turret via a fiber optic cable, but the light still must be transferred from the laser and into the optical fiber. The input surface of the optical fiber must be isolated from the environment to keep it clean and provide the most efficient surface for the light to enter the fiber.

Additionally, different lasers provide beams of light with different diameters, different amounts of divergence or spread, different wavelengths, etc. If multiple lasers are used at the same time, or if a common turret is to be used with different lasers, different combinations of lenses will be needed to properly focus the incident light onto the input surface of the optical fiber.

The present invention provides a coupling device as recited in the claims. The coupling device is for directing infrared light from a laser into an optical fiber while isolating the input end of the optical fiber from the environment and providing a way to provide a different lens assembly for use with different laser light inputs.

The first cell includes a light-guiding assembly that can include one or more optical elements that can interact with incident light. In combination with a light-transmitting conduit and the connector securable to an end of the conduit, the window in the housing can be spaced from the end of the light-transmitting conduit. The window seals a space in the housing between the window and the light-transmitting conduit.

The coupler of the invention provides means for holding an end of a light-transmitting conduit at a fixed position, and means for mounting a lens assembly so that the position of the lens assembly is adjustable relative to the end of the light-transmitting conduit and so that the lens assembly can be replaced.

The present invention also provides a method as recited in the claims.

According to another feature provided by the invention, the source of light is a first source of light and the lens assembly is a first lens assembly, and the method comprises the steps of selecting a second source of light, selecting a corresponding second lens assembly based on the selected second source, and removing and replacing the first lens assembly with the second lens assembly.

The foregoing and other features of the invention are more fully described and particularly pointed out in the claims. The following description and annexed drawings set forth in detail several illustrative embodiments, these embodiments being indicative of but a few of the various ways in which the principles of the invention may be employed.

### Brief Description of the Drawings

FIG. 1 is a schematic view of a system including a coupling device in accordance with the invention.
FIG. 2 is a perspective view of an exemplary coupling device provided by the invention.
FIG. 3 is an exploded view of the coupling device of FIG. 2.
FIG. 4 is a cross-sectional view of the coupling device shown in FIG. 2 as seen along lines 4-4.

### Detailed Description

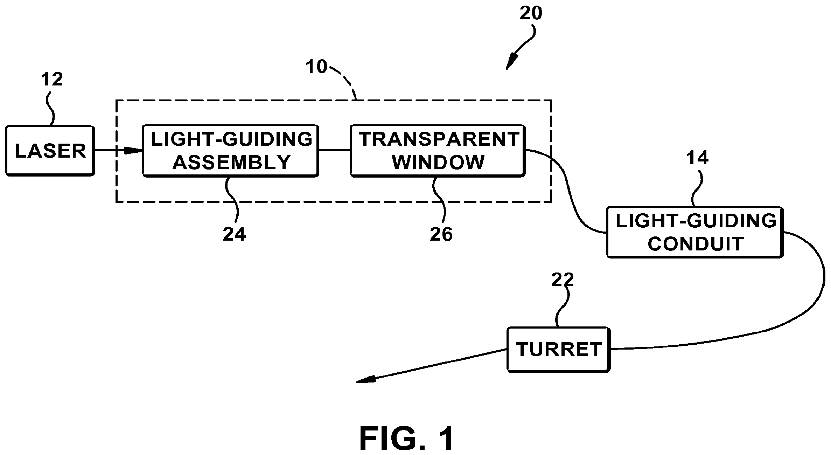

Turning now to the drawings, and initially to FIG. 1, our invention provides a coupling device 10 and method for directing infrared light from a laser or other light source 12 into an optical fiber or other light-transmitting conduit 14. Our coupling device also isolates the input end of the optical fiber from the environment and provides a way to employ a different lens assembly with different laser light inputs.

An exemplary use for this coupling device 10 is in an aircraft missile defense system 20. The system 20 includes a laser 12 for generating infrared light and a turret 22 that can direct the light toward a missile to blind its infrared sensors. Optionally, the laser 12 can include multiple lasers with different wavelengths, or another light source. A fiber optic cable, with an optical fiber 14, helps to guide the light from the laser 12 to the turret 22. The coupling device 10 directs the light from the laser 12 into the optical fiber 14.

Different lasers can produce beams of light with different diameters, different amounts of divergence or spread, different wavelengths, etc. If multiple lasers are used at the same time, or if a common turret is to be used with different lasers, different combinations of lenses or other optical devices are needed to properly focus the incident light onto the input surface of the optical fiber in such a way that the light enters the optical fiber in an efficient manner.

Our coupling device 10 includes an optical assembly 24 with one or more lenses, mirrors, or other optical devices to direct the light into the optical fiber 14. The optical fiber is part of a cable with an outer sheath that protects the fiber.

If dust or other contaminants accumulate on the end of the optical fiber, however, those contaminants (dirt, dust, moisture, chemicals, etc.) can greatly reduce the amount of light that enters the fiber. And a high power laser could ignite the contaminants or otherwise interact with the contaminants to damage the fiber. To minimize or eliminate these problems, our coupling device 10 also includes an optically transparent window 26 that isolates the end of the fiber from any contaminants in the environment to keep the optical fiber 14 clean, and thereby provide the most efficient surface for the light to enter the fiber. The transparent window 26 typically is spaced from the end of the optical fiber 14, thereby also spacing any contamination that accumulates on the window 26 from the end of the optical fiber 14. The window 26 thus spaces any contaminants away from the focal point of the light being directed onto the input end of the fiber 14. The power of the light at the window 26 is more diffuse and less likely to interact with the contaminants in a way that would damage the window or inhibit efficient entry of the light into the fiber.

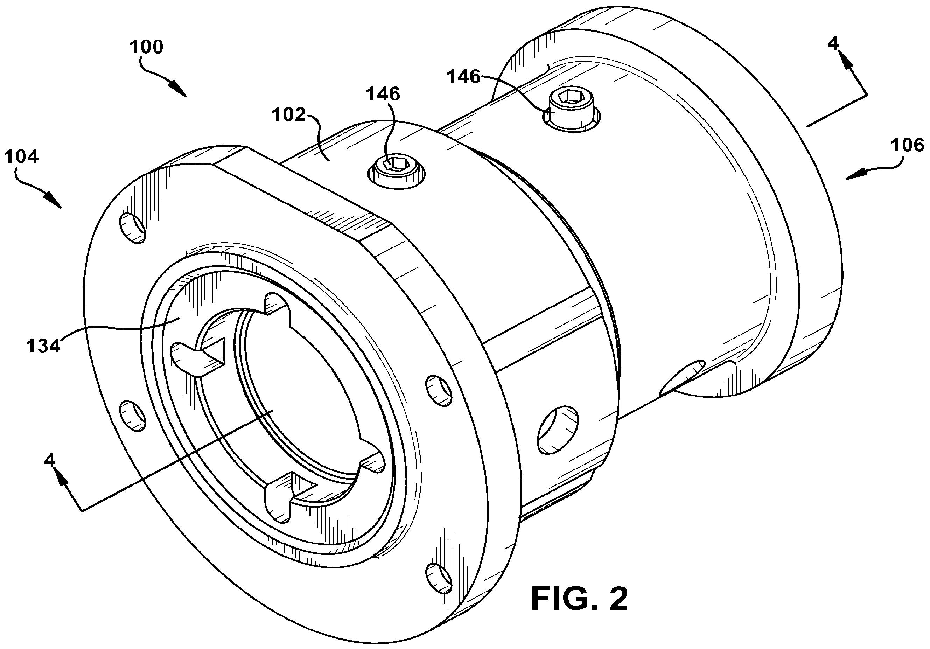

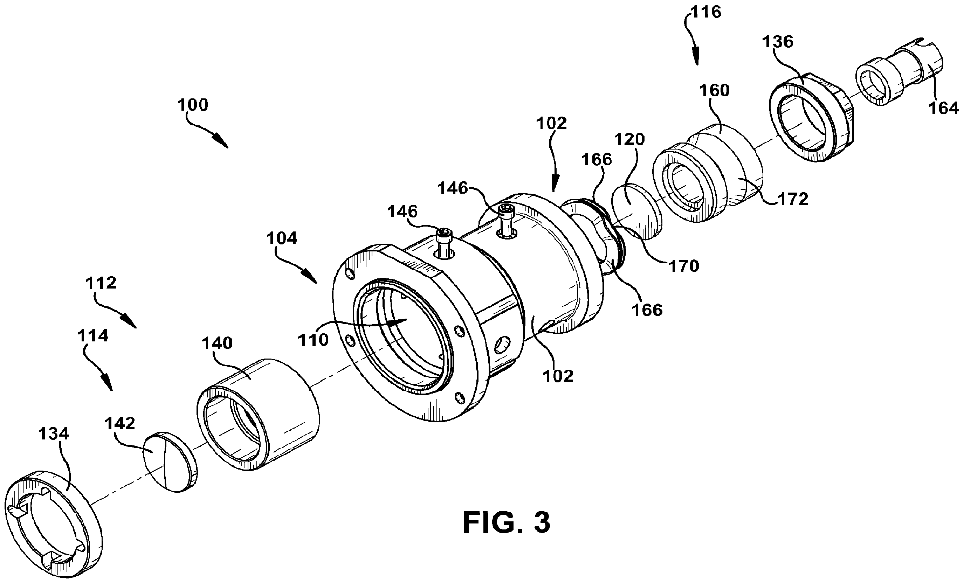

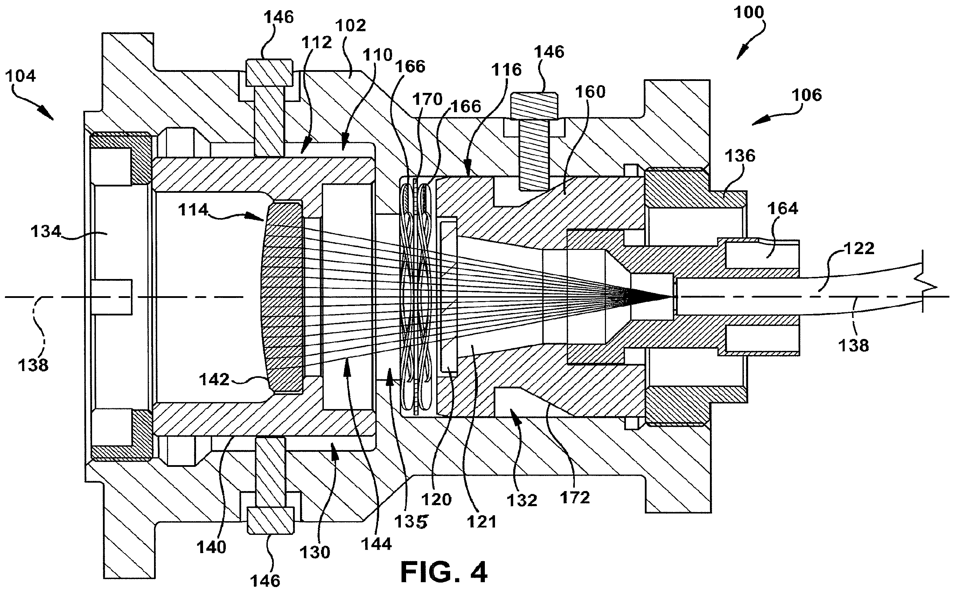

FIGS. 2-4 show an exemplary coupling device 100, also called an optical coupler, that includes a housing 102 having a first side 104, a second side 106, and a bore 110 that provides a passage for light between the first side 104 and the second side 106. The bore 110 is adapted to receive both a first cell 112 having a light-guiding assembly 114 and a second cell 116 having an optically transparent window 120. The second cell 116 also is connectable to a light-transmitting conduit 122, such as an optical fiber or other light guide. The window 120 in the second cell 116 protects the end of an optical fiber 122 when the first cell 114 is removed.

The optical coupler 100 also includes at least one retainer for holding at least one of the first cell 112 and the second cell 116 in the bore 110 of the housing 102. This allows the first and second cells 112 and 116 to be independently removed and replaced relatively easily. In the illustrated embodiment, the bore 110 in the housing 102 includes two chambers 130 and 132 and a passage 135 extending between the chambers 130 and 132.

The illustrated bore 110 includes a first chamber 130 opening to the first side 104 of the housing 102 and a second chamber 132 open to the second side 106 of the housing 102. Each chamber 130 and 132 is adapted to receive a respective cell 112 and 116. Once the cells 112 and 116 are placed in the bore 110, a retainer 134 and 136 holds each cell 112 and 116 in its respective chamber 130 and 132. In this embodiment, each retainer 134 and 136 has threads on an outer diameter that mate with corresponding threads inside the ends of the bore 110 to securely hold the respective cells 112 and 116 in their respective chambers 130 and 132. In an alternative embodiment (not shown), the bore can have a reduced diameter at one end such that light can travel through the bore and out the housing, but the first and second cells cannot. In that situation, both the first cell and the second cell would be inserted from the same side of the housing and only one retainer would be needed to capture the cells and hold them in the housing.

Additionally, although the illustrated bore 110 extends along a straight line generally coextensive with a longitudinal axis 138 of the coupler housing 102, the bore is not necessarily arranged along a single straight line, in which case the housing 102 may be provided with one or more mirrors, prisms, or other light-guiding devices to turn or redirect the light from the axis on which it enters the housing.

The first cell 112 includes a housing 140 or other mounting device for the light-guiding assembly 114. The light-guiding assembly 114 includes one or more optical elements 142 that can interact with incident light and direct the light to the optical fiber 122. The optical elements can include one or more lenses, prisms, mirrors, or other optical devices that can interact with light to focus or otherwise guide the light. Since a common optical element is a lens, the light-guiding assembly 114 also can be referred to as a lens assembly even if it includes elements that are not lenses. The illustrated optical element 142 is a lens that focuses the incident light onto the input end of the optical fiber 122, as indicated by the traced light paths 144 from the lens. The optical elements 142 are secured in a fixed position relative to the housing 140 of the first cell 112, but the cell itself is adjustably mounted within the first chamber 130. A cell-alignment device 146 secures the cell 112 in a desired position relative to the bore 110 of the coupler housing 102.

In the illustrated embodiment, the coupler housing 102 includes at least one passage opening on the bore for receiving a cell-alignment device 146. The cell-alignment device 146 cooperates with the housing 102 of the coupler 100 to fix at least one of the first cell 112 and the second cell 116 in a desired position relative to at least one of a length of the bore 110 and a direction transverse the length of the bore. In this embodiment at least one passage is threaded, and the cell-alignment device 146 includes a screw that engages the first cell 112 or the second cell 116 to hold it in a desired position. In the illustrated embodiment a plurality of radially-extending passages that open to the first chamber 130 in the housing 102 are fitted with threaded screws or bolts that engage the cell housing 140 to hold the first cell 112 in a desired location. The cell housing 140 typically has a smaller diameter than the bore 110 in the first chamber 130 to allow for adjustment of the position of the cell 112 within the bore 110. The position of the cell housing 140 generally is adjusted along the axis and transverse the axis so that the optical elements 142 are aligned on the axis of the coupler housing 102 and/or the axis of the bore 110.

On the other side of the bore 110, in the second chamber 132, the second cell 116 includes a housing 160 and the optically-transparent window 120 mounted in the housing 160 of the second cell 116. The transparent window 120 serves to preserve the environmental seal in an inner chamber 121 of the second chamber 132 whenever the first cell 112 and its optical elements 142 is removed from the first chamber 130. The second cell 116 is mounted to a light-transmitting conduit 122, such as a fiber optic cable with an optical fiber, and a connector 164 securable to an end of the conduit 122 for connecting the conduit to the coupler 100. The housing 160 of the second cell 116 and the connector 164 are connectable, such as with a threaded connection, snap connection, etc. In the illustrated embodiment, the connector 164 is mounted to the housing 160 of the second cell 116 through a threaded connection. As mentioned above, the window 120 in the housing 160 is spaced from the end of the light-transmitting conduit 122. The distance between the window 120 and the end of the light-transmitting conduit 122 is fixed.

The inner chamber 121 is defined by the space within the housing 160 of the second cell 116 between the window 120 on one side and the connector 164 and the light-transmitting conduit 122 on the other. The window 120 seals one end of the inner chamber 121 and the connector 164 and the light-transmitting conduit 122 seal the other end. The inner chamber 121 can be filled with a gas or coated with a desiccant or other material to minimize or remove any moisture and/or to prevent the infiltration of dust or other contaminants into the sealed inner chamber 121.

As discussed above in connection with the first chamber 130, a number of passages extend radially through the coupler's housing 102 and open on the bore 110, specifically the second chamber 132 in this case, to receive a cell-alignment device 146, such as a screw, that passes through the coupler housing 102 to the bore 110 to engage the respective housing 160 of the cell 116. The cell alignment devices 146 therefore cooperate with the housing 102 of the coupler 100 to adjust the position of each cell 112 and 116 along at least one of a length of the bore 110 and a direction transverse the length of the bore.

In the illustrated embodiment, the second cell 116, which houses the transparent window 120, is biased against its retainer 136 at a distal end of the bore 110. The biasing means include springs 166 that push the second cell 116 against the retainer 136. The springs 116 include one or more spring washers, also called wavesprings, with central openings for passage of light therethrough. If multiple springs 116 are used, a flat washer 170 may be interposed between the springs 166, as shown, to prevent them from nesting against one another. Thus the axial position of the second cell 116 can be adjusted by adjusting the position of the retainer 136. Additionally, the outer surface of the second cell's housing 160 has a sloped surface 172 and the alignment devices 146 engage that sloped surface 172 to push the second cell 116 against the retainer 136 and hold it in position. The sloped surface 172 interacts with at least one cell-alignment device 146 to position the second cell 116 relative to the bore 110.

In an alternative embodiment (not shown), the housing 160 of the second cell 116 is incorporated into the coupler housing 102. Thus the window 120 is mounted in the bore 110 to define the second chamber 132, and the optical fiber 122, in the connector 164, is connected directly to the coupler housing 102. The first cell 112 then must be axially and transversely adjustable relative to the axis of the bore 110.

In summary, our invention provides an optical coupler 100 comprising (a) means for holding an end of a light-transmitting conduit 122 at a fixed position, and (b) means for mounting a light-guiding or lens assembly 114 so that the position of the light-guiding assembly 114 is adjustable relative to the end of the light-transmitting conduit 122 so that the light-guiding assembly 114 can be replaced. The holding means includes one or more of the connector 164, the housing 160 of the second cell 116, the coupler housing 102, a retainer 136, and one or more of the cell-alignment devices 146 in the second chamber 132. The mounting means includes one or more of the first cell 112, the coupler housing 102, a retainer 134, and one or more of the cell-alignment devices 146 in the first chamber 130. When the coupler 100 is switched from one type of laser to another, the light-guiding assembly 114 also must be changed. This is easy to do by changing the first cell 112. The window 120 seals the end of the optical fiber 122 during the changes.

Our invention also provides a corresponding method, which includes the following steps: (i) selecting a source of light, such as a laser; (ii) selecting a lens assembly based on the selected source; and (iii) mounting the lens assembly in a housing between the selected source and a light-transmitting conduit to direct light from the selected source to an end of the light conduit. The method can also include the step of adjusting the position of the lens assembly relative to the end of the light-transmitting conduit. As mentioned above, when the laser or other light source is changed, generally the light-guiding assembly also must be changed. So for this method, the source of light mentioned above is a first source of light and the lens assembly is a first lens assembly, and the method includes the steps of (a) selecting a second source of light, (b) selecting a corresponding second lens assembly based on the selected second source, and (c) removing and replacing the first lens assembly with the second lens assembly.

In summary, our invention provides a missile defense system for aircraft that includes a laser for generating infrared light, a turret that can direct the light toward a missile to blind its infrared sensors, and an optical fiber for delivering the light to the turret. The system includes a coupling device for directing the light from the laser into the optical fiber. The coupling device includes a light-guiding assembly with one or more lenses or other optical devices to direct the light into the optical fiber. The coupling device also isolates the input end of the optical fiber from the environment with an optically-transparent window and provides a way to use a different light-guiding assembly with different lasers. The window isolates the end of the fiber from any contaminants in the environment to keep the optical fiber relatively clean, and thereby provide a suitable surface for the light to enter the fiber.

Although the invention has been shown and described with respect to a certain embodiment, equivalent alterations and modifications will occur to others skilled in the art upon reading and understanding this specification and the annexed drawings. In particular regard to the various functions performed by the above described integers (components, assemblies, devices, compositions, etc.), the terms (including a reference to a "means") used to describe such integers are intended to correspond, unless otherwise indicated, to any integer which performs the specified function of the described integer (i.e., that is functionally equivalent), even though not structurally equivalent to the disclosed structure which performs the function in the herein illustrated exemplary embodiment of the invention. The scope of protection is limited by the appended claims.

## Claims

1. An optical coupler (100), comprising:
(a) a housing (102) having a first side (104), a second side (106), and a bore (110) that provides a passage for light between the first side and the second side, where the bore is adapted to receive a first cell (112) at the first side (104) of the housing (102) and a second cell (116) at the second side (106) of the housing (102), the first cell (112) having a light-guiding assembly (114), and the second cell (116) having a housing (160) and an optically-transparent window (120) mounted in the housing (160) of the second cell (116);
(b) a connector (164) securable to an end of a light-transmitting conduit (122), where the connector (164) is connected to the housing (160) of the second cell (116), such that the window (120) in the second cell (116) is arranged to be spaced from the end of the light-transmitting conduit (122), and
(c) at least one retainer (134, 136) for holding the first cell and the second cell in the bore of the housing, which allows the first cell and the second cell to be removed and replaced.

2. An optical coupler as set forth in claim 1 or any other claim, where the bore (110) includes a first chamber (130) opening to the first side (104) of the housing (102) and a second chamber (132) opening to the second side (106) of the housing, where each chamber is adapted to receive a respective one of the first and second cells (112, 116).

3. An optical coupler as set forth in claim 1 or any other claim, where each retainer (134, 136) has a ring shape with external screw threads and at least a portion of the bore (110) is threaded to receive the retainers.

4. An optical coupler as set forth in claim 1 or any other claim, where the light-guiding assembly (114) includes one or more optical elements (142) that can interact with incident light.

5. An optical coupler as set forth in claim 4, where the optical elements (142) are secured in a fixed position relative to a housing (140) of the first cell (112).

6. An optical coupler as set forth in claim 1 or any other claim, comprising a cell-alignment device (146) that cooperates with the housing (102) of the coupler (100) to fix at least one of the first cell (112) and the second cell (116) in a desired position relative to at least one of a length of the bore (110) and a direction transverse the length of the bore.

7. An optical coupler as set forth in claim 1 or any other claim, where at least one of the first cell (112) and the second cell (116) is mounted in the bore (110) for adjustment along the length of the bore.

8. An optical coupler as set forth in claim 1 or any other claim, where at least one of the first cell (112) and the second cell (116) is mounted in the bore (110) for adjustment in a direction transverse the length of the bore.

9. A method, comprising the steps of: (i) selecting a source of light; (ii) providing an optical coupler (100) according to any proceeding claim; (iii) selecting a lens assembly based on the selected source as the light-guiding assembly (114); (iv) securing the connector (164) to a light-transmitting conduit (122); and (v) mounting the lens assembly in the housing (102) between the selected source and the light-transmitting conduit (122) to direct light from the selected source to an end of the light-transmitting conduit (122).

10. A method as set forth in claim 9, comprising the step of adjusting the position of the lens assembly relative to the end of the light-transmitting conduit.

## Patentansprüche

1. Optischer Koppler (100), umfassend:
(a) ein Gehäuse (102), aufweisend eine erste Seite (104), eine zweite Seite (106) und eine Bohrung (110), die einen Durchgang für Licht zwischen der ersten Seite und der zweiten Seite bereitstellt, wobei die Bohrung ausgelegt ist zum Aufnehmen einer ersten Zelle (112) an der ersten Seite (104) des Gehäuses (102) und einer zweiten Zelle (116) an der zweiten Seite (106) des Gehäuses (102), wobei die erste Zelle (112) eine Lichtleitbaugruppe (114) aufweist und die zweite Zelle (116) ein Gehäuse (160) und ein in dem Gehäuse (160) der zweiten Zelle (116) montiertes optisch transparentes Fenster (120) aufweist;
(b) einen Steckverbinder (164), an einem Ende einer lichtdurchlässigen Leitung (122) sicherbar, wobei der Steckverbinder (164) mit dem Gehäuse (160) der zweiten Zelle (116) derart verbunden ist, dass das Fenster (120) in der zweiten Zelle (116) dafür angeordnet ist, von dem Ende der lichtdurchlässigen Leitung (122) beabstandet zu sein, und
(c) mindestens einen Halter (134, 136) zum Halten der ersten Zelle und der zweiten Zelle in der Bohrung des Gehäuses, welches es ermöglicht, die erste Zelle und die zweite Zelle zu entfernen und zu ersetzen.

2. Optischer Koppler nach Anspruch 1 oder einem anderen Anspruch, wobei die Bohrung (110) eine zu der ersten Seite (104) des Gehäuses (102) hin öffnende erste Kammer (130) und eine zu der zweiten Seite (106) des Gehäuses hin öffnende zweite Kammer (132) aufweist, wobei jede Kammer ausgelegt ist zum Aufnehmen einer jeweiligen der ersten und der zweiten Zelle (112, 116).

3. Optischer Koppler nach Anspruch 1 oder einem anderen Anspruch, wobei jeder Halter (134, 136) eine Ringgestalt mit äußeren Schraubenköpfen aufweist und mindestens ein Teil der Bohrung (110) mit einem Gewinde zum Aufnehmen der Halter versehen ist.

4. Optischer Koppler nach Anspruch 1 oder einem anderen Anspruch, wobei die Lichtleitbaugruppe (114) ein oder mehrere optische Elemente (142), die mit einfallendem Licht wechselwirken können, aufweist.

5. Optischer Koppler nach Anspruch 4, wobei die optischen Elemente (142) relativ zu einem Gehäuse (140) der ersten Zelle (112) in einer festen Position gesichert sind.

6. Optischer Koppler nach Anspruch 1 oder einem anderen Anspruch, umfassend eine Zellausrichtungsvorrichtung (146), die mit dem Gehäuse (102) des Kopplers (100) zusammenwirkt, um die erste Zelle (112) und/oder die zweite Zelle (116) in einer gewünschten Position relativ zu einer Länge der Bohrung (110) und/oder einer Richtung quer zu der Länge der Bohrung festzulegen.

7. Optischer Koppler nach Anspruch 1 oder einem anderen Anspruch, wobei die erste Zelle (112) und/oder die zweite Zelle (116) in der Bohrung (110) zur Einstellung entlang der Länge der Bohrung montiert ist.

8. Optischer Koppler nach Anspruch 1 oder einem anderen Anspruch, wobei die erste Zelle (112) und/oder die zweite Zelle (116) in der Bohrung (110) zur Einstellung in einer Richtung quer zu der Länge der Bohrung montiert ist.

9. Verfahren, umfassend die Schritte: (i) Auswählen einer Lichtquelle; (ii) Bereitstellen eines optischen Kopplers (100) nach einem vorhergehenden Anspruch; (iii) Auswählen einer Linsenbaugruppe auf Grundlage der ausgewählten Quelle als die Lichtleitbaugruppe (114); (iv) Sichern des Steckverbinders (164) an einer lichtdurchlässigen Leitung (122); und (v) Montieren der Linsenbaugruppe in dem Gehäuse (102) zwischen der ausgewählten Quelle und der lichtdurchlässigen Leitung (122) zum Richten von Licht von der ausgewählten Quelle zu einem Ende der lichtdurchlässigen Leitung (122).

10. Verfahren nach Anspruch 9, umfassend den Schritt des Einstellens der Position der Linsenbaugruppe relativ zu dem Ende der lichtdurchlässigen Leitung.

## Revendications

1. Coupleur optique (100) comprenant :
(a) un boîtier (102) ayant un premier côté (104), un second côté (106) et un alésage (110) qui fournit un passage pour la lumière entre le premier côté et le second côté, l'alésage étant adapté pour recevoir une première cellule (112) au niveau du premier côté (104) du boîtier (102) et une seconde cellule (116) au niveau du second côté (106) du boîtier (102), la première cellule (112) ayant un ensemble de guidage de lumière (114), et la seconde cellule (116) ayant un boîtier (160) et une fenêtre optiquement transparente (120) montée dans le boîtier (160) de la seconde cellule (116) ;
(b) un connecteur (164) pouvant être fixé à une extrémité d'un conduit de transmission de la lumière (122), le connecteur (164) étant connecté au boîtier (160) de la seconde cellule (116), de telle sorte que la fenêtre (120) dans la seconde cellule (116) est agencée pour être espacée de l'extrémité du conduit de transmission de la lumière (122), et
(c) au moins un élément de retenue (134, 136) destiné à maintenir la première cellule et la seconde cellule dans l'alésage du boîtier, ce qui permet à la première cellule et à la seconde cellule d'être retirées et remplacées.

2. Coupleur optique tel que défini dans la revendication 1 ou toute autre revendication, l'alésage (110) comprenant une première chambre (130) s'ouvrant sur le premier côté (104) du boîtier (102) et une seconde chambre (132) s'ouvrant sur le second côté (106) du boîtier, chaque chambre étant adaptée pour recevoir une cellule respective parmi les première et seconde cellules (112, 116).

3. Coupleur optique tel que défini dans la revendication 1 ou toute autre revendication, chaque élément de retenue (134, 136) ayant une forme d'anneau avec des filetages de vis externes, et au moins une partie de l'alésage (110) étant filetée pour recevoir les éléments de retenue.

4. Coupleur optique tel que défini dans la revendication 1 ou toute autre revendication, l'ensemble de guidage de lumière (114) comprenant un ou plusieurs éléments optiques (142) qui peuvent interagir avec la lumière incidente.

5. Coupleur optique tel que défini dans la revendication 4, les éléments optiques (142) étant fixés dans une position fixe par rapport à un boîtier (140) de la première cellule (112).

6. Coupleur optique tel que défini dans la revendication 1 ou toute autre revendication, comprenant un dispositif d'alignement de cellules (146) qui coopère avec le boîtier (102) du coupleur (100) pour fixer au moins l'une de la première cellule (112) et de la seconde cellule (116) dans une position souhaitée par rapport à au moins l'une d'une longueur de l'alésage (110) et d'une direction transversale à la longueur de l'alésage.

7. Coupleur optique tel que défini dans la revendication 1 ou toute autre revendication, au moins l'une de la première cellule (112) et de la seconde cellule (116) étant montée dans l'alésage (110) pour un ajustement le long de la longueur de l'alésage.

8. Coupleur optique tel que défini dans la revendication 1 ou toute autre revendication, au moins l'une de la première cellule (112) et de la seconde cellule (116) étant montée dans l'alésage (110) pour un ajustement dans une direction transversale à la longueur de l'alésage.

9. Procédé, comprenant les étapes consistant à : (i) sélectionner une source de lumière ; (ii) fournir un coupleur optique (100) selon l'une quelconque des revendications précédentes ; (iii) sélectionner un ensemble de lentilles sur la base de la source sélectionnée en tant qu'ensemble de guidage de lumière (114) ; (iv) fixer le connecteur (164) à un conduit de transmission de la lumière (122) ; et (v) monter l'ensemble de lentilles dans le boîtier (102) entre la source sélectionnée et le conduit de transmission de la lumière (122) pour diriger la lumière de la source sélectionnée à une extrémité du conduit de transmission de la lumière (122).

10. Procédé tel que défini dans la revendication 9, comprenant l'étape consistant à ajuster la position de l'ensemble de lentilles par rapport à l'extrémité du conduit de transmission de la lumière.
